# EUROPEAN PATENT SPECIFICATION

(11) **EP 3 209 911 B1**
(45) Date of publication and mention of the grant of the patent: **03.07.2019**
(21) Application number: 15853510.4
(22) Date of filing: 22.10.2015
(51) Int. Cl.: F16K 11/07, G05D 23/13, F24D 19/10

(54) **IN-LINE TEMPERATURE REGULATING VALVE**
INLINE-TEMPERATURREGELVENTIL
SOUPAPE DE RÉGULATION DE TEMPÉRATURE EN LIGNE

(30) Priority: 22.10.2014 AU 2014904213
(43) Date of publication of application: 30.08.2017
(73) Proprietor: Reliance Worldwide Corporation (Aust.) Pty. Ltd., Eagle Farm, Queensland 4009 (AU)
(72) Inventor: FORRESTAL, David Peter, Clayfield, Queensland 4011 (AU)
(74) Representative: Boult Wade Tennant LLP
(86) International application number: PCT/AU2015/000628
(87) International publication number: WO 2016/061610

(56) References cited:
- EP-B1- 1 774 210
- EP-B1- 1 774 210
- WO-A1-2004/001517
- WO-A1-2014/033678
- WO-A1-2014/138786
- WO-A1-2014/138786
- FR-A1- 2 385 961
- FR-A1- 2 385 961
- US-A- 4 870 986

## Description

### FIELD OF THE INVENTION

This invention relates to valves for liquid temperature regulating systems and more particularly to water temperature regulating valves intended for use in hydronic heating systems, but the use of the invention is not restricted to that particular field.

### BACKGROUND OF THE INVENTION

Mixing valves having valve bodies configured to combine flows of hot and cold fluids to provide mixed fluids having a controlled temperature are described in disclosures of patent specifications such as International Patent Application No. PCT/US02/27056 published as WO 03/019315.

In hydronic heating systems the role of a water temperature regulating valve is to: (1) receive high temperature water from a boiler or similar heat source; (2) receive lower temperature water returning from the heating loops of the hydronic heating system; (3) output water at a constant temperature to the heating loops of the hydronic heating system by regulating the relative flow rates of the high and lower temperature water through the valve; and (4) ensuring that any additional water added to the hydronic heating system from the boiler or similar heat source is replaced by a corresponding amount of water being returned to the boiler or similar heat source (a requirement arising from the fact that the output water is going to a closed loop which returns the water temperature regulating valve). Additionally it is important that the water temperature regulating valve provide overall temperature control to the hydronic heating system so as prevent damage to floor structures or floor coverings.

Regulation of the water temperature is achieved by a mechanism commonly used in tempering valves and thermostatic devices.

Generally, in these types of valves, the required flow passages to direct the high temperature water and lower temperature water to regulating gaps are formed by cast or mechanical channels within a brass valve body. WO2014138786 describes a water temperature regulating valve including a valve body having a cavity in which mixing of fluids can occur, and provided with a hot fluid inlet adapted for communication with a source of hot water, a cooled fluid inlet adapted for communication with an apparatus that has used the mixed fluid for heating, a mixed fluid outlet adapted for communication with an apparatus that uses the mixed fluid for heating, and a return fluid outlet adapted for communication with the source of hot water, all inlets and outlets also being in communication with the cavity provided within the valve body, said cavity being provided with an insert in a sealing relationship with an inner surface of the said cavity, said insert having a central bore and also defining flow passages and being configured to direct the flows of hot fluid entering the cavity via the hot fluid inlet and cooled fluid entering the cavity via the cooled fluid inlet, the flow passages defined by the insert interacting with moveable closure means to selectively permit, restrict or prevent the flows of hot fluid and cooled fluid into the cavity, and mixed fluid and return fluid out of the cavity, said moveable closure means being temperature-reactive and/or manually operable. FR2385961 describes a mixing valve for the production of sanitary hot water. EP1774210, WO2014033678, US4870986 and WO2004001517 also describe other types of valves in different applications. In any case, the flow passages affect the flow rates and the ability of the valve to adapt rapidly to changes in inflows. Additionally, there are occasions in which false "hot" or "cold" detections are made by the thermostatic element which usually forms part of the componentry of a temperature regulating valve. These false detections can cause problems with the regulation of the output water temperature.

### SUMMARY OF THE INVENTION

It has been found that by altering the configuration and/or structure of componentry within a temperature regulating valve a significantly improved performance can be obtained.

According to one aspect of the present invention there is provided a liquid temperature regulating valve including: a valve body having a cavity in which mixing of liquids can occur; the valve body being provided with: a hot liquid inlet adapted for communication with a source of hot liquid and through which hot liquid can enter the cavity; a return liquid inlet adapted for communication with an apparatus that uses heated liquid for heating and through which cooled liquid from the apparatus that has used heated liquid for heating can enter the cavity; a heated liquid outlet adapted for communication with an apparatus that uses heated liquid for heating and through which heated liquid can leave the cavity and flow to the apparatus that uses the heated liquid for heating; and a return outlet adapted for communication with the source of hot liquid and through which cooled liquid can leave the cavity and flow to the source of hot liquid, all inlets and outlets also being in communication with the cavity, that communication being controlled by a generally cylindrical hollow piston provided within the cavity, said piston: being associated with sealing rings that are capable of entering into sealing relationships with an inner surface of the cavity; being provided with a plurality of openings, located between the sealing rings, that permit communication between: the hot liquid inlet and an internal channel provided within the piston; and the return liquid inlet and the internal channel provided within the piston, as the piston assumes various positions within the cavity, and being movable between a plurality of extreme limits of positions within the cavity under the influence of temperature reactive means and/or manually operable temperature adjustment means; and wherein the hot liquid inlet and the return liquid inlet being in close proximity to promote the mixing of the two streams of liquid flowing into the cavity via the hot liquid inlet and return liquid inlet as the two streams of liquid flow through the internal channel in the piston from the said inlets toward the heated liquid outlet. As the streams of liquid flow through the internal channel in the piston the extent of mixing and resultant temperature profile is influenced by the mingling of the streams of liquid, it being anticipated that such mixing is more rapid and more thorough than conventional mixing within the cavity of a conventional liquid temperature regulating valve. One of the benefits is more consistent liquid temperature in the vicinity of the temperature reactive means resulting in a better and less erroneous temperature control.

In the following description the term "upwardly" with respect to the valve is to be taken to indicate the direction away from the heated liquid outlet. The temperature reactive means within the cavity preferably includes a thermostatic element cooperative with the piston, the lower end of which is mounted to the thermostatic element, preferably by clipping. The thermostatic element can be a known flat diaphragm element which expands and contracts with changes in temperature in a known manner. The interaction between the thermostatic element and the piston is such that the expansion or contraction of the thermostatic element results in movement of the piston within the cavity. Preferably, the piston and thermostatic element are constrained from displacement from the cavity by a compression spring on the upper end of which the piston rides. The lower end of the compression spring is retained within the cavity by interaction with a shoulder provided on means forming part of the heated liquid outlet. The extent of upward movement of the thermostatic element (and hence piston) is limited by contact with the bottom end of a spindle connected to a temperature indicating knob assembly and interacting with the upper end of the cavity by cooperating screw threads. (The extreme limit of upward movement of the piston is provided by a shoulder in the cavity above the hot liquid inlet.) The knob of the temperature indicating knob assembly can be turned to indicate a particular temperature and the spindle via the cooperating screw thread arrangement can be moved upwardly or downwardly relative to the cavity and to the upper end of the thermostatic element.

The thermostatic element typically includes a non-expanding part and an expanding part, usually a wax, contained in a cup. When the temperature of liquid surrounding the thermostatic element increases, the wax expands and pushes against a diaphragm within the thermostatic element which in turn transmits force and movement via an internal plug to a non-expanding internal piston. As the non-expanding internal piston in the thermostatic element is in contact with the bottom end of the spindle the thermostatic element and piston are pushed downwardly within the cavity against the force of the compression spring. Conversely, when the temperature of the liquid surrounding the thermostatic element decreases, the wax contracts and the compression spring pushes the piston and the thermostatic element upwardly within the cavity.

The movement of the piston within the cavity brings the openings in it into communication with one or more of the hot liquid inlet, the return liquid inlet, and the return outlet at various positions of the piston within the cavity. This controls the ratios of liquid entering the cavity and internal channel of the piston from the hot liquid inlet and the return liquid inlet.

The mixing of hot liquid and cooled liquid within the cavity has been determined to be quicker and more efficient according to the present invention than is the case for conventional temperature regulating valves.

While a temperature regulating valve according to the present invention may be adapted for use with various liquids, the primary use is intended to be in hydronic heating systems using heater water.

### DESCRIPTION OF PREFERRED EMBODIMENT

In order that the invention may be more clearly understood a preferred embodiment of the invention is now described with reference to the accompanying drawings in which:
Figure 1 is an exploded view of a preferred embodiment of the invention;
Figure 2 is a side view of the preferred embodiment of the invention shown in Figure 1;
Figure 3 is a longitudinal sectional view along 3-3 of Figure 2;
Figure 4 is another side view of the preferred embodiment of the invention shown in Figure 1;

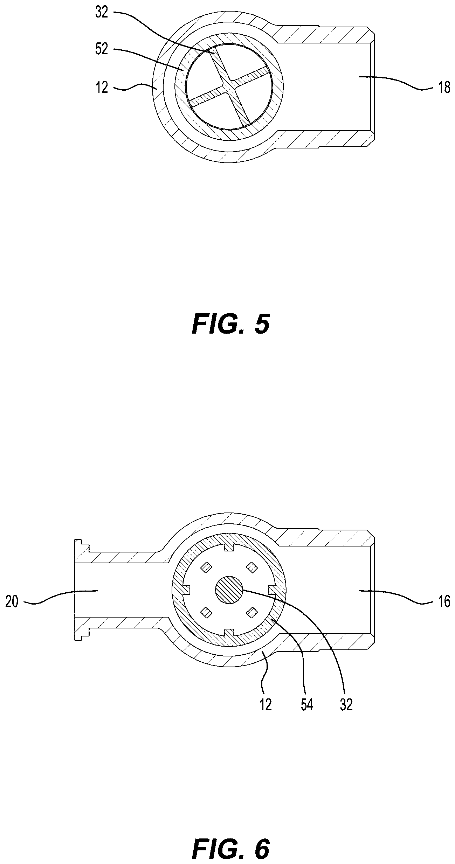

Figure 5 is a transverse sectional view along 5-5 of Figure 4;
Figure 6 is a transverse sectional view along 6-6 of Figure 4;
Figure 7 is an enlarged view of area 7 of Figure 3;
Figure 8 is an enlarged view of area 8 of Figure 3.

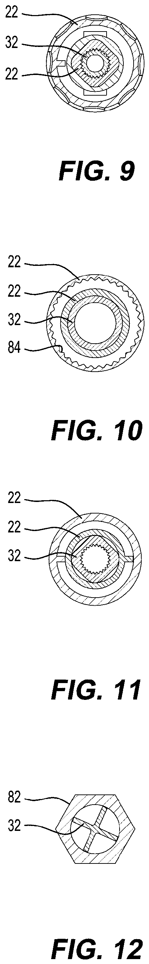

Figure 9 is a transverse sectional view along line 9-9 of Figure 2;
Figure 10 is a transverse sectional view along line 10-10 of Figure 2;
Figure 11 is a transverse sectional view along line 11-11 of Figure 2;
Figure 12 is a transverse sectional view along line 12-12 of Figure 2;

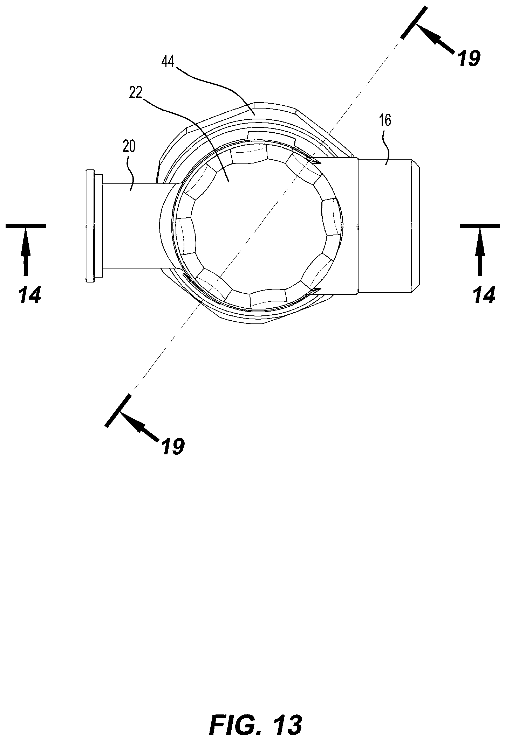

Figure 13 is a view from above of the embodiment of Figure 1;

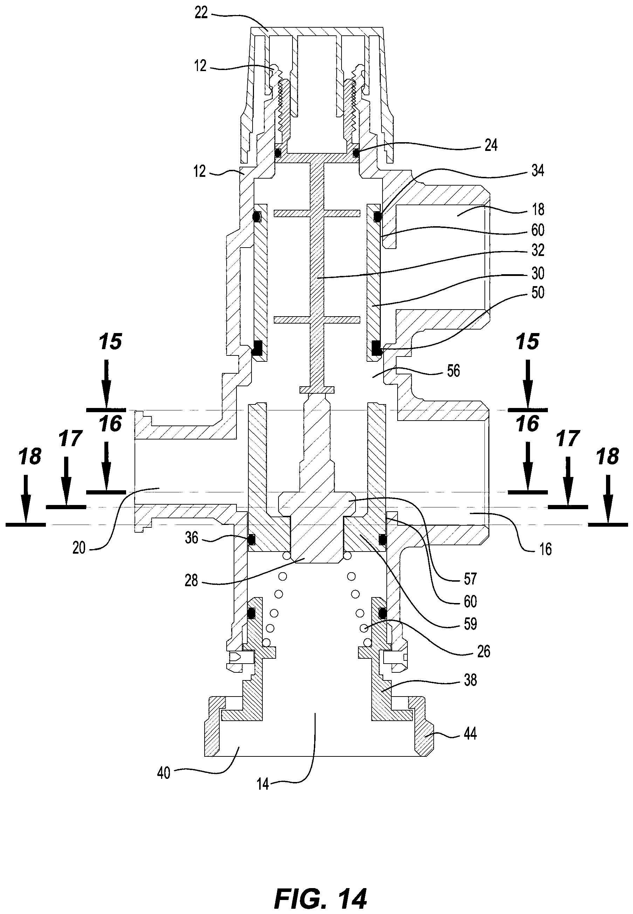

Figure 14 is a longitudinal sectional view along line 14-14 of Figure 13;

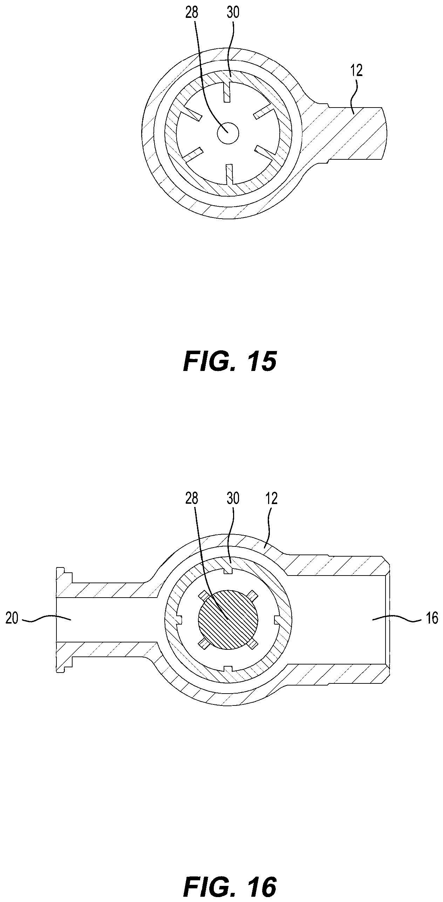

Figure 15 is a transverse sectional view along line 15-15 of Figure 14;
Figure 16 is a transverse sectional view along line 16-16 of Figure 14;

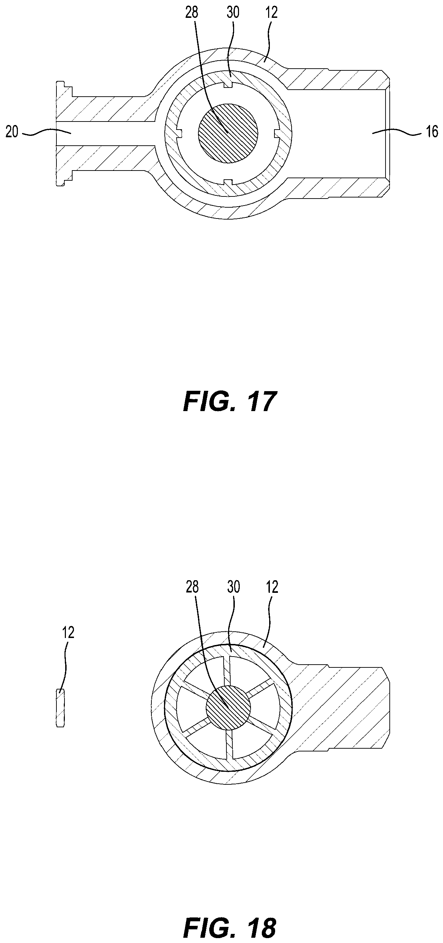

Figure 17 is a transverse sectional view along line 17-17 of Figure 14;
Figure 18 is a transverse sectional view along line 18-18 of Figure 14;
Figure 19 is a longitudinal sectional view along line 19-19 of Figure 13;

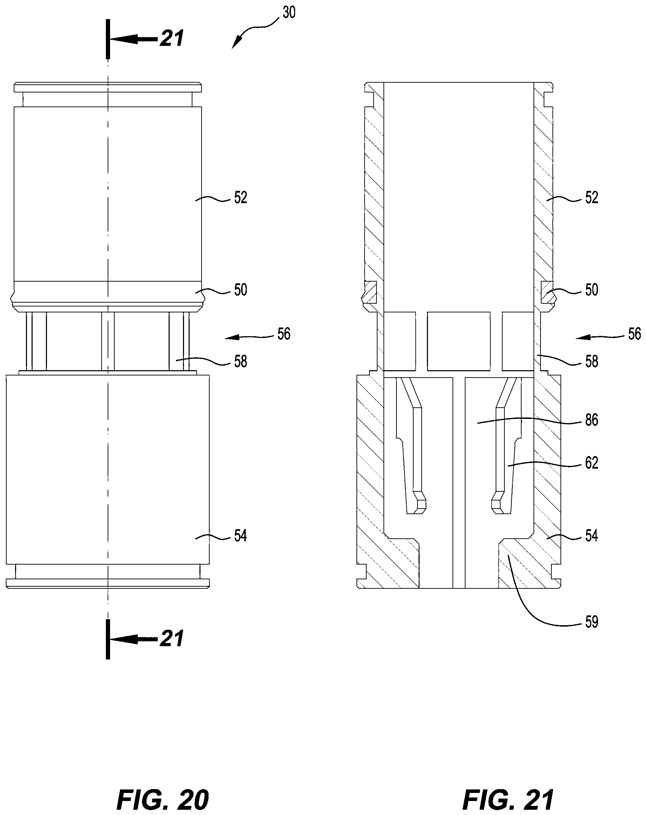

Figure 20 is a side view of the piston of the preferred embodiment of the invention;
Figure 21 is a longitudinal sectional view along line 21-21 of Figure 20;

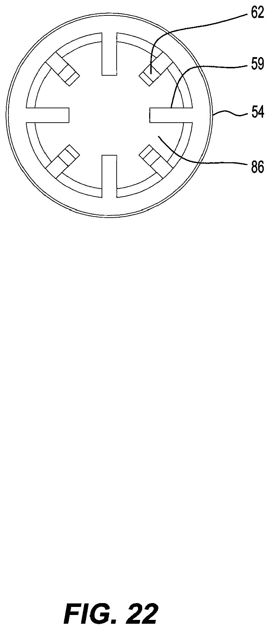

Figure 22 is a view from the bottom end of the piston shown in Figure 20;

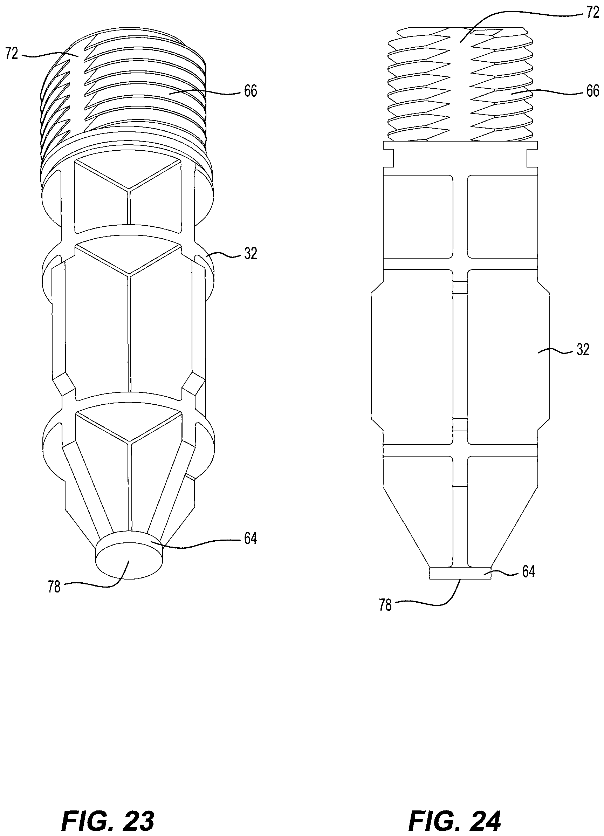

Figure 23 is a perspective view of the spindle of the preferred embodiment of the invention;
Figure 24 is a side view of the spindle of the preferred embodiment of the invention;

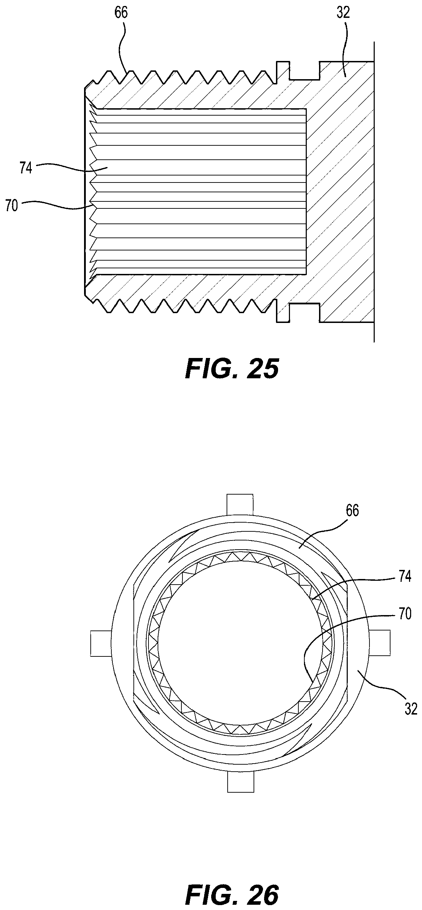

Figure 25 is a partial longitudinal sectional view of the end portion of the spindle of Figure 24;
Figure 26 is an end-on view of the spindle of Figure 24;

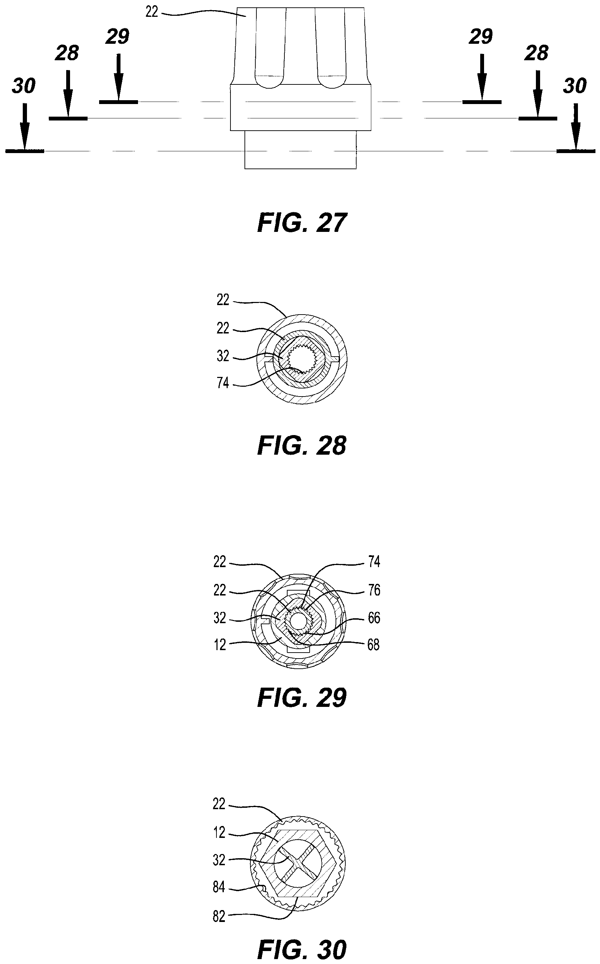

Figure 27 is a side view of the temperature control knob of the preferred embodiment of the invention in locked down position;
Figure 28 is a transverse sectional view along line 28-28 of Figure 28;
Figure 29 is a transverse sectional view along line 29-29 of Figure 28;
Figure 30 is a transverse sectional view along line 30-30 of Figure 28;
Figure 31 is a longitudinal section through the preferred embodiment of the invention showing fluid flow with both inlets open;
Figure 32 is a longitudinal section through the preferred embodiment of the invention showing fluid flow with only the return liquid inlet open;
Figure 33 is a longitudinal section through the preferred embodiment of the invention showing fluid flow with only the hot liquid inlet open;
Figure 34 is a simplified diagram depicting fluid flow in a conventional temperature regulating valve together with a visual indication of temperature;
Figure 35 is a simplified diagram depicting fluid flow in an embodiment of the present invention together with a visual indication of temperature.
Figure 36 is a diagram showing the relationship between the piston, thermostatic element and spring in an embodiment of the invention.

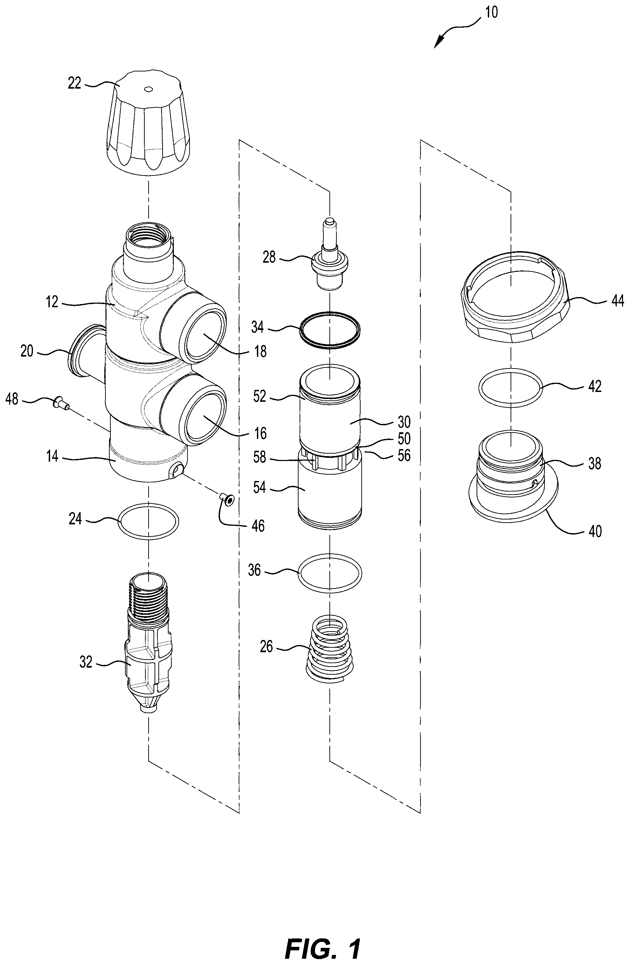

As shown in the exploded view of Figure 1 the valve, designated generally by the numeral 10, includes a valve body (12) provided with a heated liquid outlet (14) for supplying temperature regulated water to heating loops in a hydronic heating system (not shown), a return liquid inlet (16) for return of water from the aforesaid heating loops, a hot liquid inlet (18) for supply of hot water from a boiler (not shown), a return outlet (20) for return of water to the aforesaid boiler for reheating, a temperature control knob (22), a number of O-rings (24), (34), (36) and (42) to provide seals between components and the inside of the valve body (12), a spindle (32), a thermostatic element (28), a piston (30), a spring (26), and an adjustable pipe connection fitting (38) which has a pump connection face (40) for connecting with a pump manifold (not shown) and which also includes a pump connection nut (44) for securing the connection with the pump manifold. The adjustable connection fitting (38) is held in place by a screw with a security head (46) and a locking screw (48).

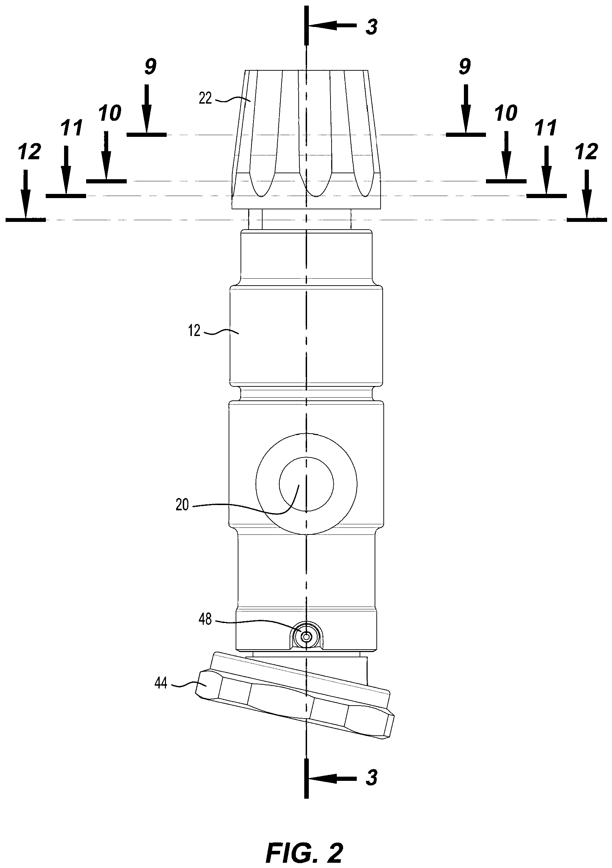

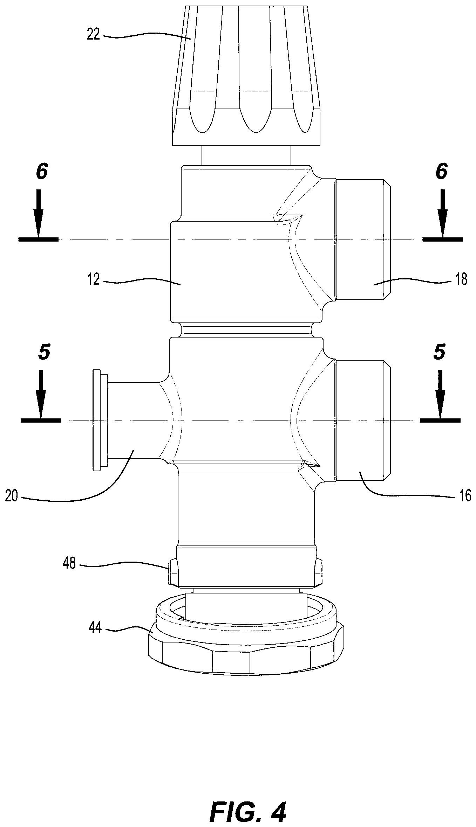

Figure 2 shows the valve from the side on which the return outlet (20) is located, while Figure 4 shows the valve from a side which shows the relative locations of the heated liquid outlet (14), a return liquid inlet (16), hot liquid inlet (18), and return outlet (20).

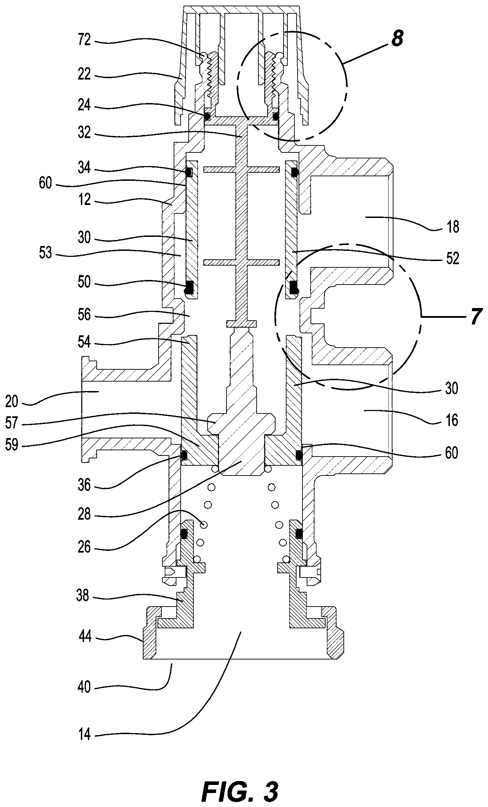

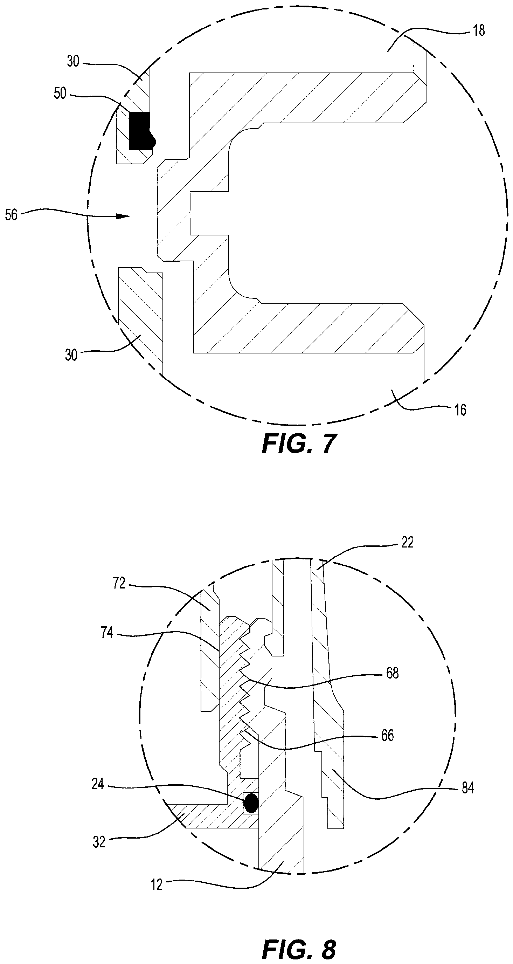

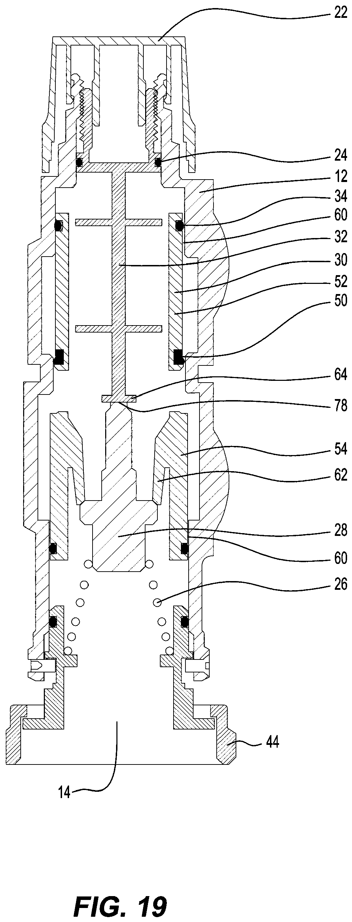

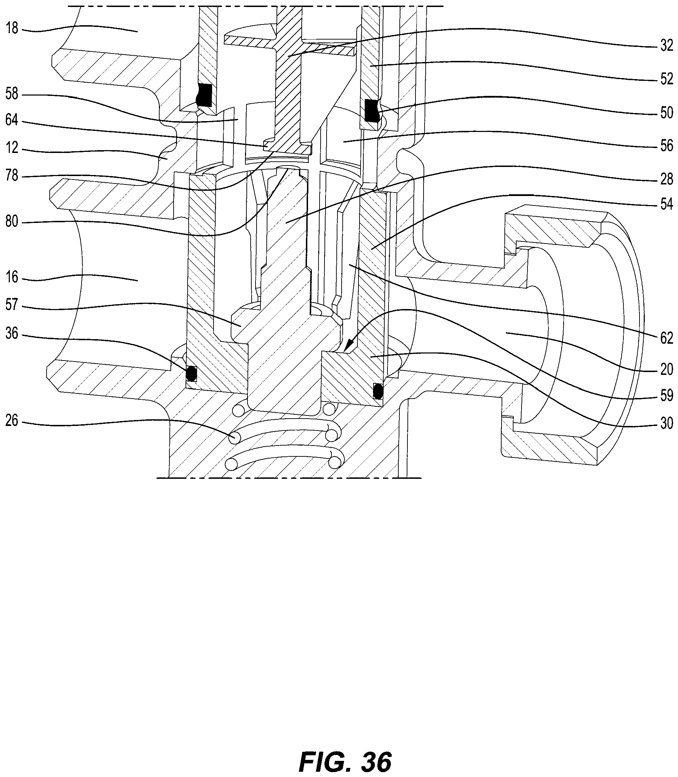

In Figure 3 which is a sectional view along D-D of Figure 2 the disposition of piston (30) in one position within the cavity (53) of valve body and its relationship with the thermostatic element (28) and spring (26) can be seen. In Figure 3 both the return liquid inlet and hot liquid inlet are open - as indicated by Figure 7. The piston (30) which is generally cylindrical, and being open at both ends, consists of two sidewall portions (52) and (54) separated by a gap (56) bridged by a plurality of supports (58). Consequently, liquid can flow through the piston (30) from either or both of the hot liquid inlet and return inlet, depending on the disposition of the piston within the valve body (12). O-rings (34) and (36) and a rubber over-moulded seal (50) mounted in grooves on the outside of side walls (52), (54) enter into sealing relationships of the inner wall (60) of valve body (12). As seen in Figure 19 the piston (30) is also provided with integrally moulded spring clips (62) which serve to hold the thermostatic element (28) in place relative to the piston (30). This prevents the thermostatic element (28) moving out of position when the piston sidewall (54) closes off the return liquid inlet (16). The lower face of the fins (59) at the bottom end of the piston (30) engage the upper end of spring (26) and the upper face of the fins at the bottom end of the piston (30) engage the lower face of shoulder (57) of the thermostatic element (28). The arrangement can be seen more clearly in Figure 36. This interaction provides the contact between the piston (30) and thermostatic element (28) that enables the expansion of the wax in the thermostatic element (28) resulting from increased temperature to cause the piston (30) to move downwardly.

The bottom end (64) of the spindle (32) can sit on top of the thermostatic element (28) and its upper end is provided with an interrupted thread (66) which engages a complimentary thread (68) provided on the upper end of the inner wall (60) of the valve body. An O-ring (24) in a groove below the thread on the spindle (32) engages the inner wall (60) of the valve body (12) in a sealing relationship. As the wax in the thermostatic element (28) expands and contracts the piston (30) moves downwardly or upwardly. The spindle (32), which is not moved upwardly or downwardly by the thermostatic element (28) or the piston (30), can be rotated only by the temperature control knob (22) as a result of the engagement of the interrupted thread (66) and the complimentary thread (68). This enables the temperature of the water leaving the valve at the heated liquid outlet (14) to be set. The inside surface (70) of the upper part (72) of the spindle (32), which generally takes the form of a closed bore, is provided with a plurality of serrations extending along the inside surface thereby forming in this embodiment, a 32 tooth spline (74). The spline (74) can engage a complimentary spline (76) depending from underside of temperature control knob (22). When the temperature control knob (22) is turned the spindle (32) rotates and moves upwardly or downwardly depending on the direction of rotation. This changes the height of that surface (78) of the spindle (32) that interacts with the top end (80) of the thermostatic element and this positioning of the spindle surface (78) in the valve dictates the set temperature of the heated liquid outlet (14) water. The fundamental purpose of the spindle (32) is to set a particular temperature for the heated liquid outlet water and maintain that temperature by not changing position under the effect of any forces within the valve. The outside perimeter (82) of the upper part of the valve body takes the shape of a regular hexagon and it can engage with a spline (84) provided on the inner face of the outer wall of the temperature regulating knob when the temperature regulating knob is pushed downwardly toward the valve body. When the spline (84) and the hexagon outer wall (82) of the valve body are engaged the temperature regulating knob cannot be rotated and cannot then be used to adjust the temperature setting of the valve.

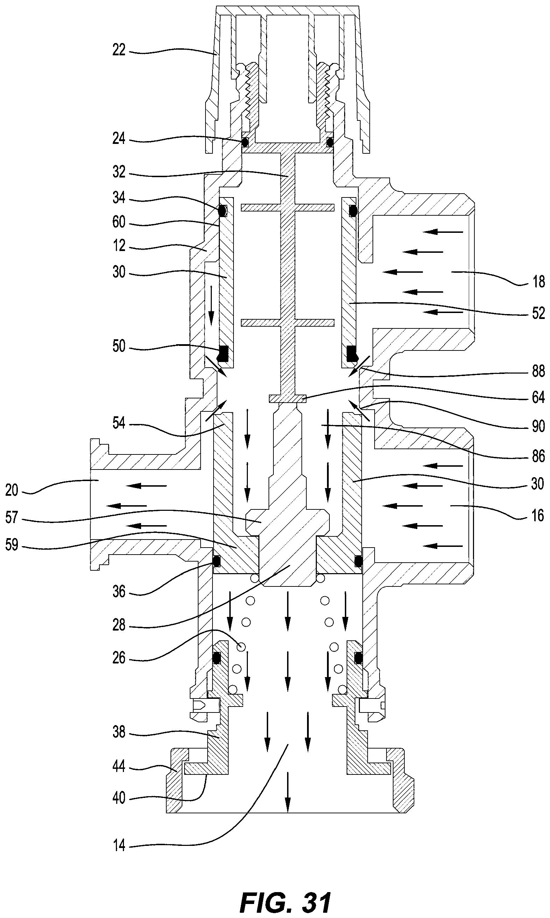

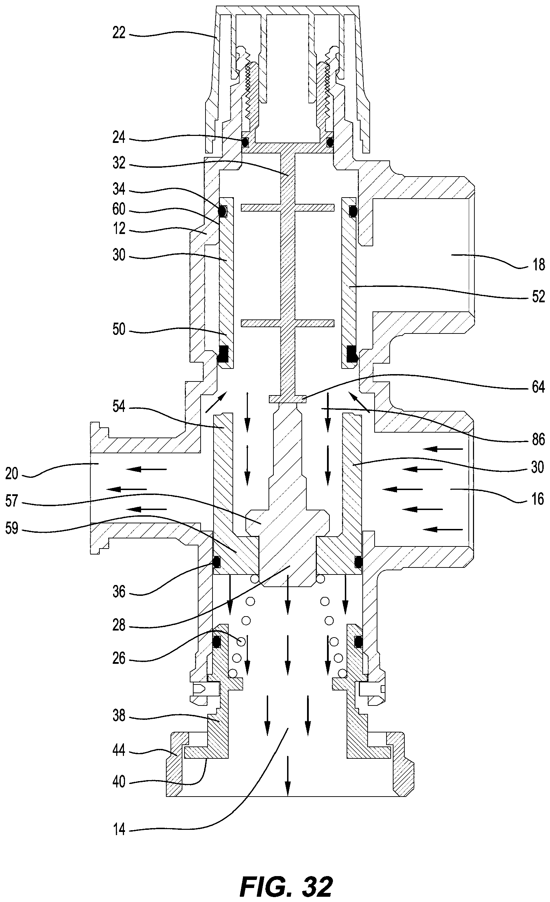

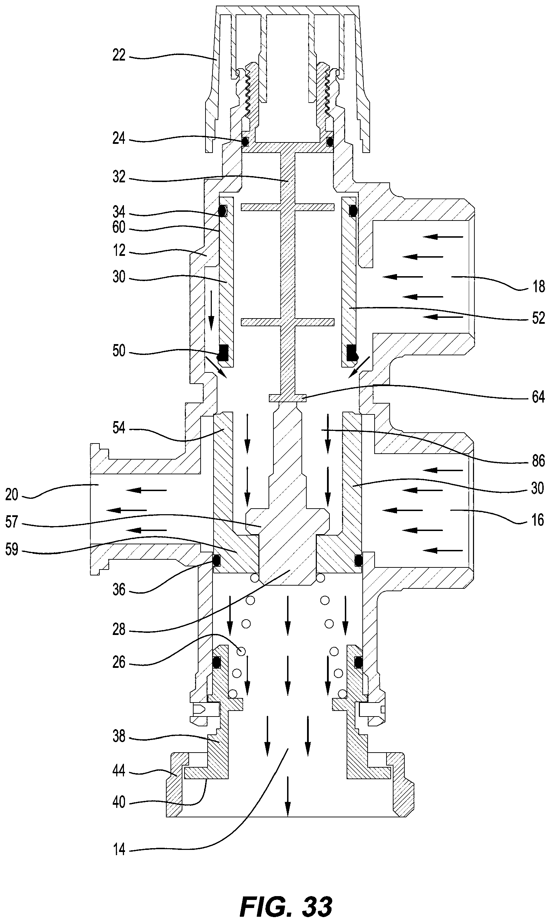

In the sectional drawings of the embodiment, Figures 31, 32 and 33, which show the embodiment with one or other or both of the inlets (16, 18) open, the position of the piston (30) relative to those inlets can be seen. The apertures formed by the gaps (56) in the piston (30) and the inlets (16, 18) allow ingress of fluids into the inner channel (86) of the piston and, where appropriate, allow the fluids to mix rapidly.

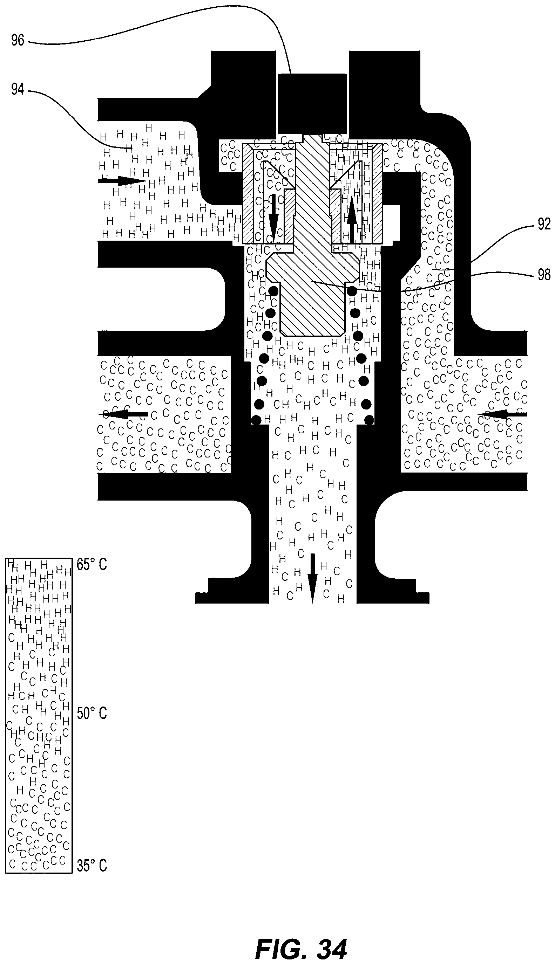

In Figure 34, which is a diagrammatic fluid flow diagram based on a sectional view through a conventional water temperature regulating valve such as used in hydronic heating systems, the colder water (92) (or return liquid) (indicated by the letter "C") enters the valve above the piston (96) while hot water (94) (hot liquid) (indicated by the letter "H") enters the valve below the piston (96). This is indicated by the arrows. The mixing of the water flows can result in temperatures around the thermostatic element (98) being higher or lower than the average mixed temperature. This results in poor thermostatic performance.

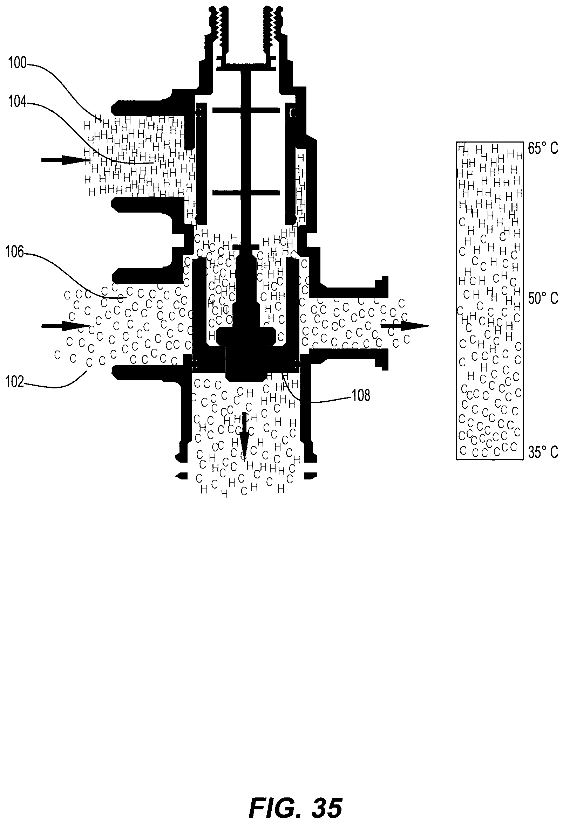

In Figure 35, which is a diagrammatic fluid flow diagram based on a sectional view through a water temperature regulating valve according to the present invention, the hot water inlet (100) and colder water inlets (102) are in close proximity and mixing of the water flows (104, 106) commences earlier and is faster and more complete. This results in a more consistent mixed water temperature around the thermostatic element (108) which leads to good thermostatic performance.

The temperature scale is not identical in each of Figures 34 and 35, and is meant to be indicative only.

In the situation where hot water is flowing into the valve through the hot liquid inlet (18) and the piston gap (56) into the inner channel (86) of the piston (30) and cooled water is flowing into the valve through the return liquid inlet (16) and the piston gap (56) into the inner channel (86) of the piston (30) the two streams of water commence mixing within the inner channel (86) of the piston (30). The mixing streams of water flow past the thermostatic element (28) and out of the valve through the heated liquid outlet (14). With stable inlet temperatures and pressures, and with a set height for the spindle surface (78), the thermostatic element (28) expands and contracts until it reaches an equilibrium position whereby the interaction of the thermostatic element (28) and the piston (30) yields a ratio of hot and cooled liquid inlet apertures that results in an average mixed water temperature that is consistently the same for that particular length of the thermostatic element (28).

For example, say the thermostatic element (28) is 10 mm long at 30°C, the spindle height is set so that at 10 mm thermostatic element (28) length the hot liquid inlet (18) and return liquid inlet (16) apertures (88, 90) are equal in size, with the hot water temperature being 40°C, the cooled water temperature being 20°C, and the pressures at each inlet being equal. Under this particular scenario there will be equal amounts of hot water at 40°C and of cooled water at 20°C entering the valve. The average temperature of heated water exiting the heated liquid outlet (14) will then be 30°C {40° + 20°/2}. When the foregoing conditions are stable the valve will maintain a constant heated water temperature of 30° at the heated liquid outlet (14) with the thermostatic element (28) length not changing from 10 mm as it 'perceives' a temperature of 30°C. If the spindle surface (78) is then moved downwardly the thermostatic element (28) will still be 10 mm long. However, now the hot liquid inlet (18) and return liquid inlet (16) apertures (88, 90) will not be equal in size. There will be, say, more hot water than cooled water entering the valve and the temperature of the heated water at the heated liquid outlet (14) will no longer be 30°C. Consequently the thermostatic element length will change in response to the now hotter water temperature. This will also cause the inlet aperture (88, 90) size ratio to change and then the temperature of the heated water at the heated liquid outlet (14) will change again. These changes in temperature will continue until a new stable equilibrium temperature for the heated water is reached at which point the thermostatic element length, the inlet aperture (88, 90) size ratio, and heated water temperature at the heated liquid outlet (14) all match. This will be the new set temperature of the valve. At any particular spindle height there is only one specific temperature for the heated water at the heated water outlet (14) with stable inlet water temperatures and pressures. As the temperature control knob (22) is adjusted, and hence the spindle height is adjusted, so too is the set temperature of the heated water at the heated liquid outlet (14) - it will be either hotter or colder depending on which direction the temperature control knob (22) is rotated.

If the valve was designed in such a way that the spindle thread could be back-driven by the expansion or contraction of the thermostatic element (28), the valve set temperature would not be stable. This would also mean that the expansion or contraction of the thermostatic element (28) would not regulate the temperature of the heated water at the heated liquid outlet (14) because the spindle would move up and down instead of the piston (30) moving up and down. Thus valves according to the invention are designed with the spindle thread that is self-locking against being back-driven by a linear force directed axially on the spindle.

## Claims

1. A liquid temperature regulating valve (10) including:
a valve body (12) having a cavity (53) in which mixing of liquids can occur; the valve body (12) being provided with:
a hot liquid inlet (18) adapted for communication with a source of hot liquid and through which hot liquid can enter the cavity (53);
a return liquid inlet (16) adapted for communication with an apparatus that uses heated liquid for heating and through which cooled liquid from the apparatus that has used heated liquid for heating can enter the cavity (53);
a heated liquid outlet (14) adapted for communication with an apparatus that uses heated liquid for heating and through which heated liquid can leave the cavity (53) and flow to the apparatus that uses the heated liquid for heating; and
a return outlet (20) adapted for communication with the source of hot liquid and through which cooled liquid can leave the cavity (53) and flow to the source of hot liquid,
all inlets and outlets also being in communication with the cavity (53), that communication being controlled by a generally cylindrical hollow piston (30) provided within the cavity (53), **characterised in** said piston (30):
being associated with sealing rings that are capable of entering into sealing relationships with an inner surface of the cavity;
being provided with a plurality of openings, located between the sealing rings, that permit communication between:
the hot liquid inlet (18) and an internal channel (86) provided within the piston (30); and
the return liquid inlet (16) and the internal channel (86) provided within the piston (30), as the piston (30) assumes various positions within the cavity (53); and
being movable between a plurality of extreme limits of positions within the cavity (53) under the influence of temperature reactive means and/or manually operable temperature adjustment means; and
wherein the hot liquid inlet (18) and the return liquid inlet (16) being in close proximity to promote the mixing of the two streams of liquid flowing into the cavity (53) via the hot liquid inlet (18) and return liquid inlet (16) as the two streams of liquid flow through the internal channel (86) in the piston (30) from the said inlets (16, 18) toward the heated liquid outlet (14).

2. A liquid temperature regulating valve (10) as claimed in claim 1, wherein the temperature reactive means includes a thermostatic element (28) cooperative with the piston (30).

3. A liquid temperature regulating valve (10) as claimed in claims 1 or 2, wherein the sealing rings are respectively located adjacent to either end of the piston (30).

4. A liquid temperature regulating valve (10) as claimed in any one of claims 1 to 3, wherein a seal is located adjacent the plurality of openings and is capable of entering into a sealing relationship with the inner surface of the cavity (53).

5. A liquid temperature regulating valve (10) as claimed in any one of the preceding claims, wherein the plurality of openings are bridged by a plurality of supports (58).

6. A liquid temperature regulating valve (10) as claimed in any one of the preceding claims, wherein the temperature reactive means is substantially located below the plurality of openings.

7. A liquid temperature regulating valve (10) as claimed in any one of the preceding claims, wherein the plurality of openings are located in a middle portion of the piston (30).

8. A liquid temperature regulating valve (10) as claimed in any one of the preceding claims, wherein an edge adjacent to the plurality of openings is configured to seal against the inner surface of the cavity (53).

9. A liquid temperature regulating valve as claimed in any one of the preceding claims, wherein the piston (30) extends from below the return liquid inlet (16) and return outlet (20) to the hot liquid inlet (18) thereabove.

## Patentansprüche

1. Flüssigkeitstemperaturregelventil (10) mit:
einem Ventilkörper (12) mit einem Hohlraum (53), in dem ein Mischen von Flüssigkeiten erfolgen kann; wobei der Ventilkörper (12) versehen ist mit:
einem Einlass für heiße Flüssigkeit (18), der ausgelegt ist, um mit einer Quelle für heiße Flüssigkeit zu kommunizieren, und durch den heiße Flüssigkeit in den Hohlraum (53) eintreten kann;
einem Einlass für Rücklaufflüssigkeit (16), der ausgelegt ist, um mit einer Vorrichtung zu kommunizieren, die erwärmte Flüssigkeit zum Heizen verwendet und durch den abgekühlte Flüssigkeit aus der Vorrichtung, die erwärmte Flüssigkeit zum Heizen verwendet hat, in den Hohlraum (53) eintreten kann;
einem Auslass (14) für erwärmte Flüssigkeit, der ausgelegt ist, um mit einer Vorrichtung zu kommunizieren, die erwärmte Flüssigkeit zum Heizen verwendet und durch die erwärmte Flüssigkeit den Hohlraum (53) verlassen und zu der Vorrichtung fließen kann, die die erwärmte Flüssigkeit zum Heizen verwendet; und
einem Rücklaufauslass (20), der ausgelegt ist, um mit der Quelle der heißen Flüssigkeit zu kommunizieren, und durch den die gekühlte Flüssigkeit den Hohlraum (53) verlassen und zu der Quelle der heißen Flüssigkeit fließen kann,
wobei alle Einlässe und Auslässe auch mit dem Hohlraum (53) in Kommunikation stehen, wobei diese Kommunikation durch einen im Allgemeinen zylindrischen Hohlkolben (30) gesteuert wird, der innerhalb des Hohlraums (53) vorgesehen ist,
**dadurch gekennzeichnet, dass** der Kolben (30):
mit Dichtungsringen in Zusammenhang steht, die in der Lage sind, Dichtungsbeziehungen zu einer Innenfläche des Hohlraums einzugehen;
mit einer Mehrzahl von Öffnungen versehen ist, die sich zwischen den Dichtungsringen befinden und die eine Kommunikation ermöglichen zwischen:
dem Einlass für heiße Flüssigkeit (18) und einem internen Kanal (86), der innerhalb des Kolbens (30) vorgesehen ist; und
dem Einlass (16) für die Rücklaufflüssigkeit und dem internen Kanal (86), der innerhalb des Kolbens (30) vorgesehen ist, wenn der Kolben (30) verschiedene Positionen innerhalb des Hohlraums (53) einnimmt; und
zwischen einer Mehrzahl von Außengrenzen von Positionen innerhalb des Hohlraums (53) unter dem Einfluss von temperaturreaktiven Mitteln und/oder manuell bedienbaren Temperatureinstellmitteln beweglich ist; und
wobei sich der Einlass für heiße Flüssigkeit (18) und der Einlass für Rücklaufflüssigkeit (16) in unmittelbarer Nähe befinden, um die Vermischung der beiden Flüssigkeitsströme, die in den Hohlraum (53) über den Einlass für heiße Flüssigkeit (18) und den Einlass für Rücklaufflüssigkeit (16) fließen, zu fördern wenn die beiden Flüssigkeitsströme durch den inneren Kanal (86) im Kolben (30) von den Einlässen (16, 18) in Richtung des Auslasses für erwärmte Flüssigkeit (14) fließen.

2. Flüssigkeitstemperaturregelventil (10) nach Anspruch 1, bei dem die temperaturreaktiven Mittel ein mit dem Kolben (30) zusammenwirkendes thermostatisches Element (28) umfassen.

3. Flüssigkeitstemperaturregelventil (10) nach Anspruch 1 oder 2,
bei dem die Dichtungsringe jeweils benachbart zu beiden Enden des Kolbens (30) angeordnet sind.

4. Flüssigkeitstemperaturregelventil (10) nach einem der Ansprüche 1 bis 3, bei dem eine Dichtung angrenzend an die Mehrzahl von Öffnungen angeordnet ist und in der Lage ist, eine Dichtungsbeziehung mit der Innenfläche des Hohlraums (53) einzugehen.

5. Flüssigkeitstemperaturregelventil (10) nach einem der vorhergehenden Ansprüche, bei dem die Mehrzahl von Öffnungen durch eine Mehrzahl von Trägern (58) überbrückt ist.

6. Flüssigkeitstemperaturregelventil (10) nach einem der vorhergehenden Ansprüche, bei dem das temperaturreaktive Mittel im Wesentlichen unterhalb der Mehrzahl von Öffnungen angeordnet ist.

7. Flüssigkeitstemperaturregelventil (10) nach einem der vorhergehenden Ansprüche, bei dem die Mehrzahl der Öffnungen in einem mittleren Abschnitt des Kolbens (30) angeordnet ist.

8. Flüssigkeitstemperaturregelventil (10) nach einem der vorhergehenden Ansprüche, bei dem eine an die Mehrzahl von Öffnungen angrenzende Kante konfiguriert ist, um gegen die Innenfläche des Hohlraums (53) abzudichten.

9. Flüssigkeitstemperaturregelventil nach einem der vorhergehenden Ansprüche, bei dem sich der Kolben (30) von unterhalb des Einlasses (16) für die Rücklaufflüssigkeit und des Rücklaufauslasses (20) bis zum Einlass (18) für die heiße Flüssigkeit darüber erstreckt.

## Revendications

1. Soupape de régulation de température de liquide (10) comportant :
un corps de soupape (12) ayant une cavité (53) dans laquelle peut se produire un mélange de liquides ; le corps de soupape (12) étant muni :
d'une entrée de liquide chaud (18) adaptée pour communiquer avec une source de liquide chaud et à travers laquelle un liquide chaud peut entrer dans la cavité (53) ;
d'une entrée de liquide de retour (16) adaptée pour communiquer avec un appareil qui utilise un liquide chauffé pour le chauffage et à travers laquelle un liquide refroidi provenant de l'appareil qui a utilisé un liquide chauffé pour le chauffage peut entrer dans la cavité (53) ;
une sortie de liquide chauffé (14) adaptée pour communiquer avec un appareil qui utilise un liquide chauffé pour le chauffage et à travers laquelle un liquide chauffé peut quitter la cavité (53) et s'écouler vers l'appareil qui utilise le liquide chauffé pour le chauffage ; et
une sortie de retour (20) adaptée pour communiquer avec la source de liquide chaud et à travers laquelle un liquide refroidi peut quitter la cavité (53) et s'écouler vers la source de liquide chaud,
toutes les entrées et sorties étant également en communication avec la cavité (53), cette communication étant commandée par un piston creux globalement cylindrique (30) prévu à l'intérieur de la cavité (53), **caractérisée en ce que** ledit piston (30) :
est associé à des bagues d'étanchéité qui sont capables d'entrer en relations d'étanchéité avec une surface interne de la cavité ;
est muni d'une pluralité d'ouvertures, situées entre les bagues d'étanchéité, permettant d'établir une communication entre :
l'entrée de liquide chaud (18) et un canal interne (86) prévu à l'intérieur du piston (30) ; et
l'entrée de liquide de retour (16) et le canal interne (86) prévu à l'intérieur du piston (30), lorsque le piston (30) prend diverses positions à l'intérieur de la cavité (53) ; et
est mobile entre une pluralité de limites extrêmes de positions à l'intérieur de la cavité (53) sous l'influence d'un moyen réactif à la température et/ou d'un moyen de réglage de température à actionnement manuel ; et
dans laquelle l'entrée de liquide chaud (18) et l'entrée de liquide de retour (16) étant très proches pour favoriser le mélange des deux flux de liquide s'écoulant dans la cavité (53) via l'entrée de liquide chaud (18) et l'entrée de liquide de retour (16) lorsque les deux flux de liquide s'écoulent à travers le canal interne (86) dans le piston (30) desdites entrées (16, 18) vers la sortie de liquide chauffé (14).

2. Soupape de régulation de température de liquide (10) telle que revendiquée dans la revendication 1, dans laquelle le moyen réactif à la température comporte un élément thermostatique (28) coopérant avec le piston (30).

3. Soupape de régulation de température de liquide (10) telle que revendiquée dans la revendication 1 ou 2, dans laquelle les bagues d'étanchéité sont respectivement situées de manière adjacente à l'une ou l'autre des extrémités du piston (30).

4. Soupape de régulation de température de liquide (10) telle que revendiquée dans l'une quelconque des revendications 1 à 3, dans laquelle un joint d'étanchéité est situé de manière adjacente à la pluralité d'ouvertures et est capable d'entrer dans une relation d'étanchéité avec la surface interne de la cavité (53).

5. Soupape de régulation de température de liquide (10) telle que revendiquée dans l'une quelconque des revendications précédentes, dans laquelle la pluralité d'ouvertures sont pontées par une pluralité de supports (58) .

6. Soupape de régulation de température de liquide (10) telle que revendiquée dans l'une quelconque des revendications précédentes, dans laquelle le moyen réactif à la température est situé sensiblement en dessous de la pluralité d'ouvertures.

7. Soupape de régulation de température de liquide (10) telle que revendiquée dans l'une quelconque des revendications précédentes, dans laquelle la pluralité d'ouvertures sont situées dans une partie médiane du piston (30) .

8. Soupape de régulation de température de liquide (10) telle que revendiquée dans l'une quelconque des revendications précédentes, dans laquelle un bord adjacent à la pluralité d'ouvertures est configuré pour assurer l'étanchéité contre la surface interne de la cavité (53).

9. Soupape de régulation de température de liquide telle que revendiquée dans l'une quelconque des revendications précédentes, dans laquelle le piston (30) s'étend depuis le dessous de l'entrée de liquide de retour (16) et de la sortie de retour (20) jusqu'au-dessus de l'entrée de liquide chaud (18).
